# EUROPEAN PATENT SPECIFICATION

(11) **EP 2 926 972 B1**
(45) Date of publication and mention of the grant of the patent: **25.04.2018**
(21) Application number: 15160350.3
(22) Date of filing: 23.03.2015
(51) Int. Cl.: B29C 45/76, B29C 45/84, H02P 3/14, H02H 7/12

(54) **INJECTION MOLDING MACHINE**
SPRITZGIESSMASCHINE
MACHINE DE MOULAGE À INJECTION

(30) Priority: 31.03.2014 JP 2014074523
(43) Date of publication of application: 07.10.2015
(73) Proprietor: SUMITOMO HEAVY INDUSTRIES, LTD., Tokyo 141-6025 (JP)
(72) Inventor: Sugiura, Kosuke, Chiba, 263-0001 (JP); Mizuno, Hiroyuki, Kanagawa, 237-8555 (JP)
(74) Representative: Louis Pöhlau Lohrentz

(56) References cited:
- EP-A1- 1 933 449
- EP-A1- 2 664 439
- EP-A2- 2 552 010
- US-A1- 2010 102 770

## Description

### BACKGROUND OF THE INVENTION

### Incorporation by Reference

Priority is claimed to Japanese Patent Application No. 2014-074523, filed March 31, 2014, the entire content of which is incorporated herein by reference.

### Field of the Invention

The present invention relates to an injection molding machine.

### Description of Related Art

An injection molding machine has a mold clamping unit that performs mold closing, mold clamping, and mold opening on a mold unit, an injection unit that fills the mold unit with a molding material, an ejector unit that pushes a molding product out of the mold unit, and the like. The mold clamping unit, the injection unit, and the ejector unit have motors.

The injection molding machine is provided with a converter device that converts AC electric power from a power source into DC electric power, an inverter device that converts DC electric power from the converter device into AC electric power and supplies the AC electric power to various motors, and a DC link that connects the converter device and the inverter device to each other.

The converter device has, in parallel, a first electric power conversion unit that converts the AC electric power from the power source into DC electric power and supplies the DC electric power to the inverter device and a second electric power conversion unit that converts regenerative electric power from the inverter device into AC electric power and supplies the AC electric power to the power source (refer to, for example, Japanese Unexamined Patent Application Publication No. 2013-027987 and the European patent application EP 2 644 439 A1). The regenerative electric power can be recovered and reused, and the energy efficiency of the motor can be improved.

The first electric power conversion unit and the second electric power conversion unit are connected in parallel, and thus there is room for improvement regarding the current state in the converter device.

### SUMMARY OF THE INVENTION

The present invention has been made in view of the above-described problems, and an object thereof is to provide an injection molding machine capable of current state improvement in a converter device.

In order to achieve the above -described objective, an aspect of the present invention provides an injection molding machine including: a motor; a drive circuit of the motor; a converter device including, in parallel, a first electric power conversion unit that converts AC electric power from a power source into DC electric power and supplies the DC electric power to the drive circuit and a second electric power conversion unit that converts regenerative electric power from the drive circuit into AC electric power and supplies the AC electric power to the power source; a main switch disposed in the middle of a power supply line that connects the converter device and the power source to each other; and a controller, the controller is configured to switch the main switch from ON to OFF and is configured to limit to a regenerative operation of the second electric power conversion unit, with the controller switching the main switch from ON to OFF after limiting a regenerative operation of the second electric power conversion unit.

According to the aspect of the present invention, an injection molding machine capable of current state improvement in a converter device is provided.

### BRIEF DESCRIPTION OF THE DRAWINGS

Fig. 1 is a diagram illustrating an electric circuit of an injection molding machine according to a first embodiment of the present invention.
Fig. 2 is a flowchart illustrating processing by a controller of the first embodiment.
Fig. 3 is a diagram illustrating an electric circuit of an injection molding machine according to a modification example of the first embodiment.
Fig. 4 is a diagram illustrating an electric circuit of an injection molding machine according to a second embodiment of the present invention.
Fig. 5 is a flowchart illustrating processing by a controller of the second embodiment.
Fig. 6 is a diagram illustrating an electric circuit of an injection molding machine according to a modification example of the second embodiment.

### DETAILED DESCRIPTION OF THE INVENTION

Hereinafter, embodiments of the present invention will be described with reference to accompanying drawings. In the drawings, like reference numerals will be used to refer to like elements and description thereof will be omitted.

### [First Embodiment]

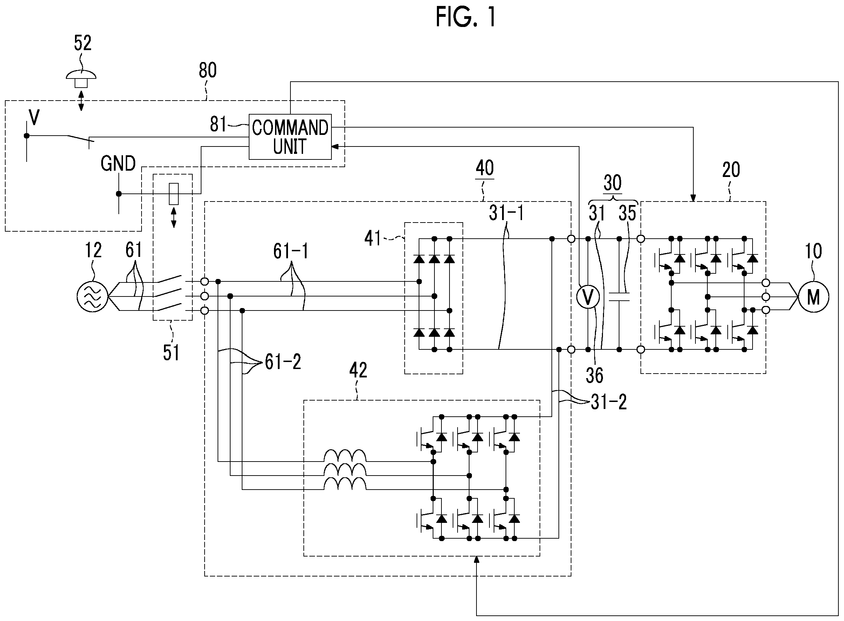

Fig. 1 is a diagram illustrating an electric circuit of an injection molding machine according to a first embodiment of the present invention. The injection molding machine is provided with a motor 10, an inverter device 20 as a drive circuit, a DC link 30, a converter device 40, a main switch 51, a controller 80, and the like.

The motor 10 may be any one of a mold clamping motor, an injection motor, a plasticizing motor, an ejector motor, and the like. The mold clamping motor moves a movable platen forward and backward with respect to a stationary platen and performs mold closing, mold clamping, and mold opening on a mold unit. The mold unit is configured to have, for example, a stationary mold and a movable mold. The stationary mold is mounted on a surface of the stationary platen facing the movable platen, and the movable mold is mounted on a surface of the movable platen facing the stationary platen. The injection motor moves a screw that is arranged in a plasticizing cylinder forward so that a molding material in front of the screw is injected from the plasticizing cylinder and the mold unit is filled with the molding material. The plasticizing motor rotates the screw that is arranged in the plasticizing cylinder so that the molding material is sent forward along a spiral groove which is formed in the screw and the molding material is accumulated in front of the screw. A plunger may be arranged instead of the screw in the plasticizing cylinder, and the motor 10 may move the plunger forward and backward. The ejector motor moves a movable member in the mold unit forward and backward so that a molding product is pushed out of the mold unit. The number of the motors 10 is one in Fig. 1. However, the number may be two or more.

In a case where a plurality of the motors 10 are provided, a plurality of electric power conversion units, each of which is configured to have the inverter device 20, the DC link 30, and the converter device 40, may be disposed. Also, only one electric power conversion unit may be disposed with the plurality of motors 10 connected in parallel.

The inverter device 20 converts DC electric power from the DC link 30 and the converter device 40 into AC electric power and supplies the AC electric power to the motor 10. The inverter device 20 has, for example, three legs, each of which is configured to have two switching elements. The number of the legs is not particularly limited. Specific examples of the switching element include a metal oxide semiconductor filed-effect transistor (MOSFET), an insulated gate bipolar transistor (IGBT), and a bipolar transistor. A diode is connected in anti-parallel to each of the switching elements. The diode may be embedded in each of the switching elements. Regenerative electric power that is generated when the motor 10 is decelerated is supplied to the converter device 40 and the DC link 30 via the diode.

The DC link 30 includes two DC power supply lines 31 and a capacitor 35. The two DC power supply lines 31 connect the inverter device 20 and the converter device 40 to each other. Each of the DC power supply lines 31 branches into a DC power supply line 31-1 and a DC power supply line 31-2 at a branch point. The one DC power supply line 31-1 is connected to a first electric power conversion unit 41 that is provided in the converter device 40, and the other DC power supply line 31-2 is connected to a second electric power conversion unit 42 that is provided in the converter device 40. The capacitor 35 smoothes DC voltage (hereinafter, referred to as DC link voltage) between the two DC power supply lines 31.

The converter device 40 has, in parallel, the first electric power conversion unit 41 and the second electric power conversion unit 42. The first electric power conversion unit 41 converts AC electric power from a power source 12 into DC electric power and supplies the DC electric power to the inverter device 20 and the DC link 30. The first electric power conversion unit 41 is, for example, a three-phase bridge circuit and includes six diodes.

The second electric power conversion unit 42 converts regenerative electric power from the inverter device 20 into AC electric power and supplies the AC electric power to the power source 12. The second electric power conversion unit 42 has, for example, three legs, each of which is configured to have two switching elements. The number of the legs is not particularly limited. A diode is connected in anti-parallel to each of the switching elements. The diode may be embedded in each of the switching elements.

The second electric power conversion unit 42 includes six diodes as is the case with the first electric power conversion unit 41, and thus can convert the AC electric power from the power source 12 into DC electric power and can supply the DC electric power to the inverter device 20 and the DC link 30.

The main switch 51 is disposed in the middle of AC power supply lines 61 that connect the power source 12 and the converter device 40 to each other. Each of the AC power supply lines 61 branches into an AC power supply line 61-1 and an AC power supply line 61-2 at a branch point. The one AC power supply line 61-1 is connected to the first electric power conversion unit 41 and the other AC power supply line 61-2 is connected to the second electric power conversion unit 42. The main switch 51 is arranged between the branch point and the power source 12.

A relay, an electromagnetic switch, and the like constitute the main switch 51, and the main switch 51 is turned ON and OFF under the control by the controller 80. In a case where the main switch 51 is ON, the power source 12 and the converter device 40 are connected to each other. In a case where the main switch 51 is OFF, the power source 12 and the converter device 40 are disconnected from each other.

The controller 80 has a storage unit such as a memory and a central processing unit (CPU). When a control program that is stored in the storage unit is executed by the CPU, the controller 80 controls the main switch 51, the converter device 40, and the inverter device 20.

The controller 80 supplies AC electric power from the power source 12 to the first electric power conversion unit 41 by turning ON the main switch 51. The first electric power conversion unit 41 converts the AC electric power from the power source 12 into DC electric power and supplies the DC electric power to the inverter device 20 and the DC link 30.

The controller 80 generates a pulse width modulation (PWM) signal for performing PWM control and outputs the PWM signal to the inverter device 20. Each of the switching elements of the inverter device 20 is switched in accordance with the PWM signal from the controller 80 and drives the motor 10.

During the deceleration of the motor 10, regenerative electric power is generated by an induced electromotive force of the motor 10. The regenerative electric power is supplied to the DC link 30 and the like via the inverter device 20 and the capacitor 35 is charged with the induced electromotive force. As a result, the DC link voltage rises . The DC link voltage drops when the capacitor 35 is discharged with the motor 10 being accelerated or maintaining a constant speed. The DC link voltage can be detected by a voltage detector 36. The voltage detector 36 outputs a signal that shows the DC link voltage to the controller 80.

The controller 80 monitors the DC link voltage. If the DC link voltage exceeds a first threshold, the controller 80 generates a control signal such as the PWM signal and outputs the control signal to the second electric power conversion unit 42. Each of the switching elements of the second electric power conversion unit 42 is switched in accordance with the control signal from the controller 80, converts regenerative electric power into AC electric power, and supplies the AC electric power to the power source 12. The regenerative electric power can be recovered and reused, and thus the energy efficiency of the motor 10 can be improved. In addition, overcharging of the capacitor 35 can be suppressed, and damage to the capacitor 35 can be suppressed. When the capacitor 35 is discharged through power supply regeneration and the DC link voltage becomes equal to or lower than a second threshold (second threshold≤first threshold), the controller 80 stops a regenerative operation of the second electric power conversion unit 42 and stops the discharging of the capacitor 35.

The control of the second electric power conversion unit 42 may be, for example, 120° energization control instead of the PWM control.

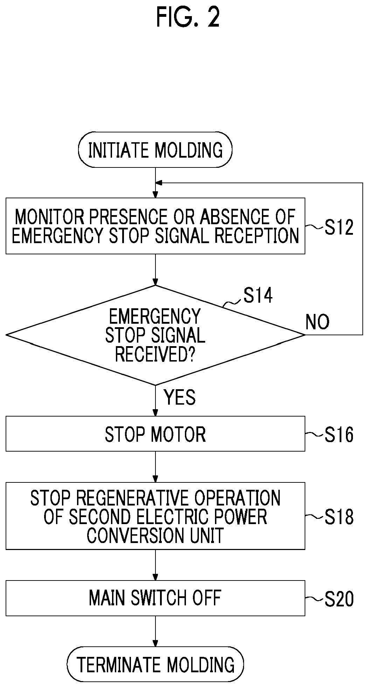

Fig. 2 is a flowchart illustrating processing by the controller of the first embodiment. In Step S12 that is illustrated in Fig. 2, the controller 80 monitors the presence or absence of emergency stop signal reception. The emergency stop signal is a signal for discontinuing injection molding in, for example, a case where an emergency stop button 52 is pressed or a case where a safety door is open.

In Step S14, the controller 80 checks the presence or absence of emergency stop signal reception. In a case where no emergency stop signal is received (NO in Step S14), the controller 80 returns to Step S12 and continues with the processing of Step S12 and the subsequent processing. In a case where the emergency stop signal is received (YES in Step S14), the controller 80 stops the motor 10 (Step S16). Since the motor 10 is decelerated and stopped, regenerative electric power is generated and the DC link voltage rises.

Then, the controller 80 turns OFF the switching element of the second electric power conversion unit 42 (called servo OFF) and limits (stop in this embodiment) the regenerative operation of the second electric power conversion unit 42 (Step S18). Then, the controller 80 switches the main switch 51 from ON to OFF (Step S20) and terminates the current processing.

According to this embodiment, the main switch 51 is switched from ON to OFF after the regenerative operation of the second electric power conversion unit 42 is stopped. Accordingly, a circulating current can be prevented. The circulating current refers to a phenomenon in which the AC electric power from the second electric power conversion unit 42 is not supplied to the power source 12 but converted into DC electric power by the first electric power conversion unit 41 to be supplied to the DC link 30. According to this embodiment, the circulating current can be prevented, and thus an unnecessary regenerative operation of the second electric power conversion unit 42 can be prevented.

Any one of the stopping of the motor 10 (Step S16) and the stopping of the regenerative operation of the second electric power conversion unit 42 (Step S18) may precede the other one. Also, both may be performed at the same time.

In a case where an emergency stop request such as the emergency stop signal is received, the controller 80 stops the regenerative operation of the second electric power conversion unit 42 and then switches the main switch 51 from ON to OFF.

The controller 80 of this embodiment has a command unit 81. The command unit 81 performs the reception of the emergency stop signal, stopping of the motor 10, stopping of the regenerative operation of the second electric power conversion unit 42, and switching of the main switch 51 from ON to OFF.

### [Modification Example of First Embodiment]

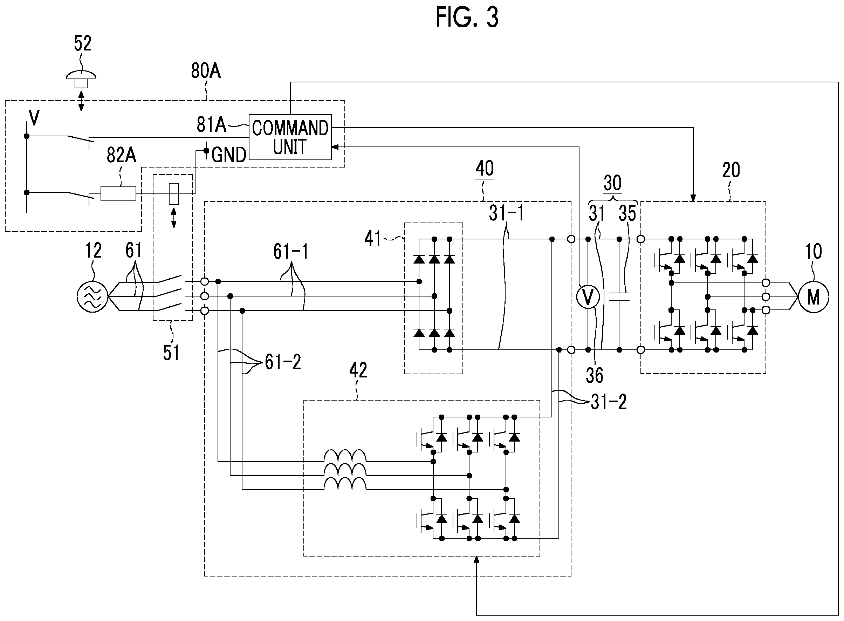

Fig. 3 is a diagram illustrating an electric circuit of an injection molding machine according to a modification example of the first embodiment. Processing by a controller 80A according to this modification example is similar to the processing illustrated in Fig. 2. Description thereof will be omitted.

As illustrated in Fig. 3, the injection molding machine is provided with the motor 10, the inverter device 20 as the drive circuit, the DC link 30, the converter device 40, the main switch 51, the controller 80A, and the like.

The controller 80A has a command unit 81A. The command unit 81A receives the emergency stop signal for discontinuing injection molding in, for example, a case where the emergency stop button 52 is pressed or a case where the safety door is open.

The command unit 81A stops the motor 10 when the emergency stop signal is received. The motor 10 is decelerated and stopped, regenerative electric power is generated, and the DC link voltage rises.

In addition, the command unit 81A turns OFF the switching element of the second electric power conversion unit 42 and stops the regenerative operation of the second electric power conversion unit 42 when the emergency stop signal is received.

The controller 80A has a delay circuit 82A. As is the case with the command unit 81A, the delay circuit 82A receives the emergency stop signal, and switches the main switch 51 from ON to OFF a predetermined period of time after the reception of the emergency stop signal. The main switch 51 is switched from ON to OFF after the regenerative operation of the second electric power conversion unit 42 is stopped. The circulating current can be prevented, and an unnecessary regenerative operation of the second electric power conversion unit 42 can be prevented.

### [Second Embodiment]

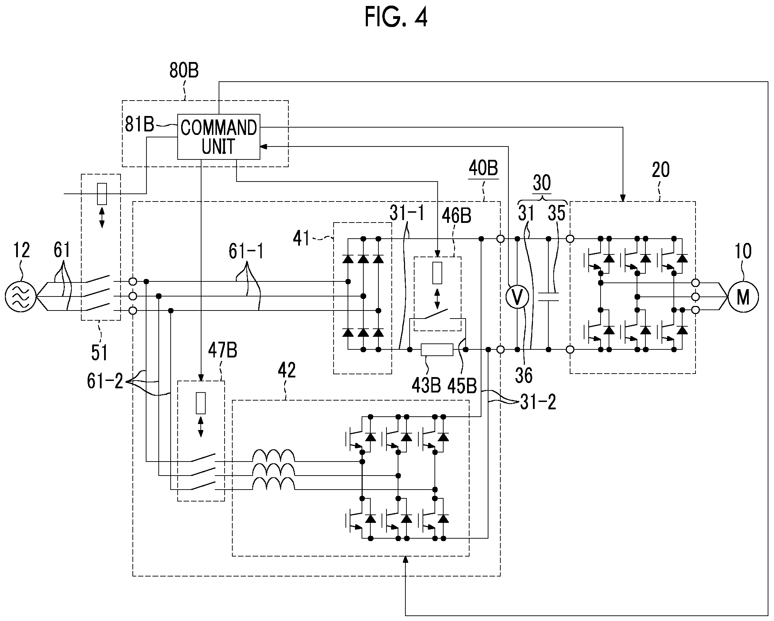

Fig. 4 is a diagram illustrating an electric circuit of an injection molding machine according to a second embodiment of the present invention. The injection molding machine is provided with the motor 10, the inverter device 20 as the drive circuit, the DC link 30, a converter device 40B, the main switch 51, a controller 80B, and the like.

The converter device 40B has a resistor 43B, a bypass line 45B, a bypass switch 46B, and a regenerative switch 47B as well as the first electric power conversion unit 41 and the second electric power conversion unit 42.

The resistor 43B is disposed in the middle of the DC power supply line 31-1 that is connected to the first electric power conversion unit 41. In Fig. 4, the resistor 43B is disposed in the middle of the DC power supply line 31-1 on a low-voltage side. However, the resistor 43B may be disposed in the middle of the DC power supply line 31-1 on a high-voltage side.

When the main switch 51 is switched from OFF to ON, the resistor 43B limits an inrush current from the first electric power conversion unit 41 to the DC link 30. Rapid charging of the capacitor 35 can be prevented, and damage to the capacitor 35 can be suppressed.

The bypass line 45B branches from the DC power supply line 31-1 and bypasses the resistor 43B. The bypass switch 46B is disposed in the middle of the bypass line 45B and the bypass switch 46B and the resistor 43B are connected in parallel.

A relay, an electromagnetic switch, and the like constitute the bypass switch 46B, and the bypass switch 46B is turned ON and OFF under the control by the controller 80. In a case where the bypass switch 46B is ON, no current flows to the resistor 43B. In a case where the bypass switch 46B is OFF, a current flows to the resistor 43B.

The regenerative switch 47B is disposed in the middle of the AC power supply line 61-2 that connects the main switch 51 and the second electric power conversion unit 42 to each other. A relay, an electromagnetic switch, and the like constitute the regenerative switch 47B, and the regenerative switch 47B is turned ON and OFF under the control by the controller 80. In a case where the main switch 51 is ON and the regenerative switch 47B is ON, the power source 12 and the second electric power conversion unit 42 are connected to each other. In a case where the main switch 51 is ON and the regenerative switch 47B is OFF, the power source 12 and the second electric power conversion unit 42 are disconnected from each other. In a case where the main switch 51 is OFF, the power source 12 and the first electric power conversion unit 41 are disconnected from each other and the power source 12 and the second electric power conversion unit 42 are disconnected from each other regardless of the state of the regenerative switch 47B.

The controller 80B limits the inrush current from the first electric power conversion unit 41 to the DC link 30 by controlling the bypass switch 46B in accordance with the state (for example, DC link voltage) of the DC link 30. In addition, the controller 80B limits an inrush current from the power source 12 to the second electric power conversion unit 42 by controlling the regenerative switch 47B in accordance with the state of the DC link 30. The inrush current is generated in a case where the capacitor 35 is insufficiently charged.

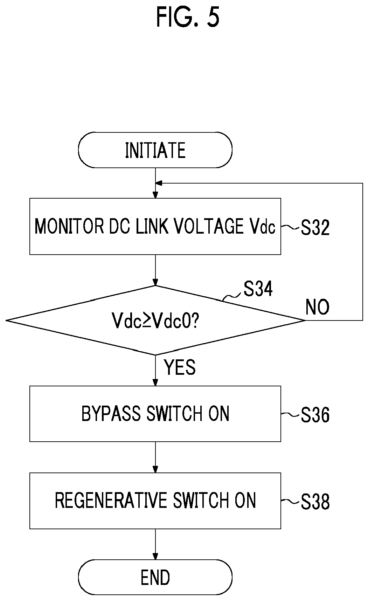

Fig. 5 is a flowchart illustrating processing by the controller of the second embodiment. The processing that is illustrated in Fig. 5 is initiated when, for example, the main switch 51 is switched from OFF to ON.

When the main switch 51 is switched from OFF to ON, the bypass switch 46B is OFF and the DC current that flows from the first electric power conversion unit 41 into the DC link 30 passes through the resistor 43B. The inrush current to the DC link 30 can be limited, rapid charging of the capacitor 35 can be suppressed, and damage to the capacitor 35 can be suppressed.

When the main switch 51 is switched from OFF to ON, the regenerative switch 47B is OFF and the power source 12 and the second electric power conversion unit 42 are disconnected from each other. Accordingly, the inrush current to the second electric power conversion unit 42 can be limited, and impairment of the second electric power conversion unit 42 can be suppressed.

In Step S32 that is illustrated in Fig. 5, a controller 80C monitors DC link voltage Vdc. The controller 80C checks whether or not the DC link voltage Vdc is equal to or higher than a threshold VdcO (Step S34) . The threshold VdcO is set so that the inrush currents to the DC link 30 and the second electric power conversion unit 42 can be limited.

In a case where the DC link voltage Vdc is lower than the threshold VdcO (NO in Step S34), charging of the capacitor 35 is insufficient. In this case, the controller 80C returns to Step S32 and continues with the processing of Step S32 and the subsequent processing.

In a case where the DC link voltage Vdc is equal to or higher than the threshold VdcO (YES in Step S34), the controller 80C turns ON the bypass switch 46B (Step S36). The DC current that flows from the first electric power conversion unit 41 into the DC link 30 passes through the bypass line 45B without passing through the resistor 43B. Then, the controller 80C turns ON the regenerative switch 47B (Step S38) . The power source 12 and the second electric power conversion unit 42 are connected to each other and power supply regeneration becomes possible.

The regenerative switch 47B may be switched from OFF to ON (Step S38) after the bypass switch 46B is switched from OFF to ON (Step S36). The regenerative switch 47B is turned ON in a state where the DC link voltage Vdc is higher than in a case where the switching is performed at the same time, and thus the second electric power conversion unit 42 can be derated.

The controller 80B of this embodiment has a command unit 81B. The command unit 81B performs the monitoring of the DC link voltage Vdc, switching of the bypass switch 46B from OFF to ON, and switching of the regenerative switch 47B from OFF to ON.

### [Modification Example of Second Embodiment]

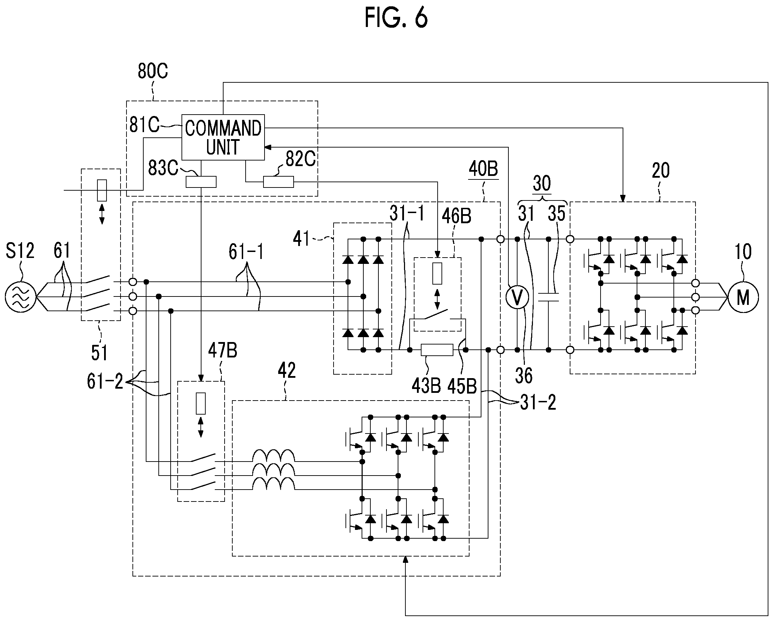

Fig. 6 is a diagram illustrating an electric circuit of an injection molding machine according to a modification example of the second embodiment. Processing by the controller 80C according to this modification example is similar to the processing illustrated in Fig. 5. Description thereof will be omitted.

As illustrated in Fig. 6, the injection molding machine is provided with the motor 10, the inverter device 20 as the drive circuit, the DC link 30, the converter device 40B, the main switch 51, the controller 80C, and the like.

The controller 80C limits the inrush current from the first electric power conversion unit 41 to the DC link 30 by controlling the bypass switch 46B in accordance with the state of the DC link 30. The controller 80C has a command unit 81C and a delay circuit 82C.

When the switching of the main switch 51 from OFF to ON is detected, the command unit 81C outputs an ON signal for switching the bypass switch 46B from OFF to ON to the delay circuit 82C. The delay circuit 82C switches the bypass switch 46B from OFF to ON a predetermined period of time after the reception of the ON signal.

When the main switch 51 is switched from OFF to ON, the bypass switch 46B is OFF, and the DC current that flows from the first electric power conversion unit 41 into the DC link 30 passes through the resistor 43B but does not become a large current. Accordingly, rapid charging of the capacitor 35 can be suppressed and damage to the capacitor 35 can be suppressed.

The DC link voltage Vdc becomes equal to or higher than the threshold VdcO a predetermined period of time after the reception of the ON signal by the delay circuit 82C, and thus the delay circuit 82C switches the bypass switch 46B from OFF to ON. The DC current that flows from the first electric power conversion unit 41 into the DC link 30 passes through the bypass line 45B without passing through the resistor 43B.

The controller 80C limits the inrush current from the power source 12 to the second electric power conversion unit 42 by controlling the regenerative switch 47B in accordance with the state of the DC link 30. The controller 80C has a delay circuit 83C as well as the command unit 81C.

When the switching of the main switch 51 from OFF to ON is detected, the command unit 81C outputs an ON signal for switching the regenerative switch 47B from OFF to ON to the delay circuit 83C. The delay circuit 83C switches the regenerative switch 47B from OFF to ON a predetermined period of time after the reception of the ON signal.

When the main switch 51 is switched from OFF to ON, the regenerative switch 47B is OFF and the power source 12 and the second electric power conversion unit 42 are disconnected from each other. Accordingly, the inrush current to the second electric power conversion unit 42 can be limited and impairment of the second electric power conversion unit 42 can be suppressed.

The DC link voltage Vdc becomes equal to or higher than the threshold VdcO a predetermined period of time after the reception of the ON signal by the delay circuit 83C, and thus the delay circuit 83C switches the regenerative switch 47B from OFF to ON. The power source 12 and the second electric power conversion unit 42 are connected to each other and power supply regeneration becomes possible.

The delay time of the delay circuit 83C for the regenerative switch 47B may be longer than the delay time of the delay circuit 82C of the bypass switch 46B. The regenerative switch 47B is switched from OFF to ON (Step S38) after the bypass switch 46B is switched from OFF to ON (Step S36). The regenerative switch 47B is turned ON in a state where the DC link voltage Vdc is higher than in a case where the switching is performed at the same time, and thus the second electric power conversion unit 42 can be derated.

The embodiments of the injection molding machine have been described above. However, the present invention is not limited to the embodiments described above. Various modifications and improvements are allowed without departing from the concept of the present invention that is described in the claims.

For example, the controller of the first embodiment or the modification example thereof may have the function of the controller according to the second embodiment or the modification example thereof.

## Claims

1. An injection molding machine comprising:
a motor (10);
a drive circuit of the motor (10);
a converter device (40) including, in parallel, a first electric power conversion unit (41) that converts AC electric power from a power source (12) into DC electric power and supplies the DC electric power to the drive circuit and a second electric power conversion unit (42) that converts regenerative electric power from the drive circuit into AC electric power and supplies the AC electric power to the power source (12);
a main switch (51) disposed in the middle of a power supply line that connects the converter device (40) and the power source (12) to each other; and
a controller (80)
**characterized in that** the controller (80) is configured to switch the main switch (51) from ON to OFF and is configured to limit a regenerative operation of the second electric power conversion unit (42), with the controller (80) switching the main switch (51) from ON to OFF after limiting a regenerative operation of the second electric power conversion unit (42).

2. The injection molding machine according to claim 1,
wherein the controller (80) switches the main switch (51) from ON to OFF after limiting the regenerative operation of the second electric power conversion unit (42) in a case where an emergency stop request is received.

3. The injection molding machine according to claim 1 or 2, further comprising:
a DC link (30) connecting the converter device (40) and the drive circuit to each other,
wherein the converter device (40) further includes a regenerative switch (47B) disposed in the middle of a power supply line that connects the power source (12) and the second electric power conversion unit (42) to each other, and
wherein the controller (80) limits an inrush current from the power source (12) to the second electric power conversion unit (42) by controlling the regenerative switch (47B) in accordance with the state of the DC link (30).

4. The injection molding machine according to claim 3,
wherein the converter device (40) further includes:
a resistor (43B) limiting an inrush current from the first electric power conversion unit (41) to the DC link (30);
a bypass line (45B) bypassing the resistor (43B); and
a bypass switch (46B) disposed in the middle of the bypass line (45B), and
wherein the controller (80) limits the inrush current from the first electric power conversion unit (41) to the DC link (30) by controlling the bypass switch (46B) in accordance with the state of the DC link (30).

5. The injection molding machine according to claim 4,
wherein the controller (80) switches the regenerative switch (47B) from OFF to ON after switching the bypass switch (46B) from OFF to ON.

6. The injection molding machine according to any of claims 1 to 5, further comprising:
a DC link (30) connecting the converter device (40B) and the drive circuit to each other;
a regenerative switch (47B) disposed in the middle of a power supply line that connects the power source (12) and the second electric power conversion unit (42) to each other;
wherein the controller (80) is configured to limit an inrush current from the power source (12) to the second electric power conversion unit (42) by controlling the regenerative switch (47B) in accordance with the state of the DC link (30).

7. The injection molding machine according to claim 6,
wherein the converter device (40B) further includes:
a resistor (43B) limiting an inrush current from the first electric power conversion unit (41) to the DC link (30);
a bypass line (45B) bypassing the resistor (43B); and
a bypass switch (4 6B) disposed in the middle of the bypass line (45B), and
wherein the controller (80) limits the inrush current from the first electric power conversion unit (41) to the DC link (30) by controlling the bypass switch (46B) in accordance with the state of the DC link (30).

8. The injection molding machine according to claim 7,
wherein the controller (80) switches the regenerative switch (47B) from OFF to ON after switching the bypass switch (46B) from OFF to ON.

## Patentansprüche

1. Spritzgießmaschine, umfassend:
einen Motor (10),
einen Treiberschaltkreis für den Motor (10),
eine Konvertervorrichtung (40), umfassend, parallelgeschaltet, eine erste elektrische Wandlereinheit (41), die elektrischen Wechselstrom von einer Stromversorgung (12) in elektrischen Gleichstrom wandelt und den elektrischen Gleichstrom dem Treiberschaltkreis zuführt, und eine zweite elektrische Wandlereinheit (42), die regenerierten elektrischen Strom von dem Treiberschaltkreis in Wechselstrom umwandelt und den Wechselstrom der Stromversorgung (12) zuführt,
einen Hauptschalter (51), der in der Mitte einer Stromversorgungsleitung angeordnet ist, welche die Konvertervorrichtung (40) und die Stromversorgung (12) miteinander verbindet, und
eine Steuerung (80),
**dadurch gekennzeichnet, dass** die Steuerung (80) so ausgebildet ist, dass sie den Hauptschalter (51) von AN nach AUS schaltet, und die so ausgebildet ist, dass sie einen regenerierenden Betrieb der zweiten elektrischen Wandlereinheit (42) begrenzt, wobei die Steuerung den Hauptschalter (51) von AN nach AUS schaltet, nachdem sie einen regenerierenden Betrieb der zweiten elektrischen Wandlereinheit (42) begrenzt hat.

2. Spritzgießmaschine nach Anspruch 1,
wobei die Steuerung (80), nachdem sie den regenerierenden Betrieb der zweiten elektrischen Wandlereinheit (42) begrenzt hat, den Hauptschalter (51) in einem Fall von AN nach AUS schaltet, in dem eine Anforderung eines Nothalts empfangen wurde.

3. Spritzgießmaschine nach Anspruch 1 oder 2, des Weiteren umfassend
eine Gleichstromverbindung (30), welche die Konvertereinheit (40) und den Treiberschaltkreis miteinander verbindet,
wobei die Konvertervorrichtung (40) weiter einen Regenerierungsschalter (47B) umfasst, der in der Mitte einer Stromversorgungsleitung angeordnet ist, welche die Stromquelle (12) und die zweite elektrische Wandlereinheit (42) miteinander verbindet, und
wobei die Steuerung (80) einen Eingangsstrom von der Stromversorgung (12) zur zweiten elektrischen Wandlereinheit (42) begrenzt, indem sie den Regenerierungsschalter (47B) entsprechend dem Zustand der Gleichstromverbindung (30) steuert.

4. Spritzgießmaschine nach Anspruch 3,
wobei die Konvertervorrichtung (40) des Weiteren umfasst:
einen Widerstand (43B), der einen Eingangsstrom von der ersten elektrischen Wandlereinheit (41) zur Gleichstromverbindung (30) begrenzt,
eine Überbrückungsleitung (45B), die den Widerstand (43B) überbrückt, und
einen Überbrückungsschalter (46B), der in der Mitte der Überbrückungsleitung angeordnet ist, und
wobei die Steuerung (80) den Eingangsstrom von der ersten elektrischen Wandlereinheit (41) zur Gleichstromverbindung (30) begrenzt, indem sie den Überbrückungsschalter (46B) entsprechend dem Zustand der Gleichstromverbindung (30) steuert.

5. Spritzgießmaschine nach Anspruch 4,
wobei die Steuerung (80) den Regenerierungsschalter (47B) von AUS nach AN schaltet, nachdem sie den Überbrückungsschalter (46B) von AUS nach AN geschaltet hat.

6. Spritzgießmaschine nach einem der Ansprüche 1 bis 5, des Weiteren umfassend:
eine Gleichstromverbindung (30), welche die Konvertervorrichtung (40B) und den Treiberschaltkreis miteinander verbindet,
einen Regenerierungsschalter (47B), der in der Mitte einer Stromversorgungsleitung angeordnet ist, welche die Stromquelle (12) und die zweite elektrische Wandlereinheit (42) miteinander verbindet,
wobei die Steuerung (80) so ausgebildet ist, dass sie einen Eingangsstrom von der Stromversorgung (12) zur zweiten elektrischen Wandlereinheit (42) begrenzt, indem sie den Regenerierungsschalter (47B) entsprechend dem Zustand der Gleichstromverbindung (30) steuert.

7. Spritzgießmaschine nach Anspruch 6,
wobei die Konvertervorrichtung (40) des Weiteren umfasst:
einen Widerstand (43B), der einen Eingangsstrom von der ersten elektrischen Wandlereinheit (41) zur Gleichstromverbindung (30) begrenzt,
eine Überbrückungsleitung (45B), die den Widerstand (43B) überbrückt, und
einen Überbrückungsschalter (46B), der in der Mitte der Überbrückungsleitung angeordnet ist, und
wobei die Steuerung (80) den Eingangsstrom von der ersten elektrischen Wandlereinheit (41) zur Gleichstromverbindung (30) begrenzt, indem sie den Überbrückungsschalter (46B) entsprechend dem Zustand der Gleichstromverbindung (30) steuert.

8. Spritzgießmaschine nach Anspruch 7,
wobei die Steuerung (80) den Regenerierungsschalter (47B) von AUS nach AN schaltet, nachdem sie den Überbrückungsschalter (46B) von AUS nach AN geschaltet hat.

## Revendications

1. Machine de moulage par injection comprenant :
un moteur (10) ;
un circuit de commande du moteur (10) ;
un dispositif de conversion (40) comprenant, en parallèle, une première unité de conversion de puissance électrique (41) qui convertit la puissance électrique alternative provenant d'une source de puissance (12) en une puissance électrique continue et qui fournit la puissance électrique continue au circuit de commande et une deuxième unité de conversion de puissance électrique (42) qui convertit la puissance électrique de régénération provenant du circuit de commande en une puissance électrique alternative et qui fournit la puissance électrique alternative à la source de puissance (12) ;
un commutateur principal (51) disposé au centre d'une ligne d'alimentation qui connecte le dispositif de conversion (40) et la source de puissance (12) l'un à l'autre ; et
un contrôleur (80),
**caractérisée en ce que** le contrôleur (80) est configuré pour commuter le commutateur principal (51) de fermé à ouvert et est configuré pour limiter une opération de régénération de la deuxième unité de conversion de puissance électrique (42), le contrôleur (80) commutant le commutateur principal (51) de fermé à ouvert après avoir limité une opération de régénération de la deuxième unité de conversion de puissance électrique (42).

2. Machine de moulage par injection selon la revendication 1,
dans laquelle le contrôleur (80) commute le commutateur principal (51) de fermé à ouvert après avoir limité l'opération de régénération de la deuxième unité de conversion de puissance électrique (42) dans un cas dans lequel une demande d'arrêt d'urgence est reçue.

3. Machine de moulage par injection selon la revendication 1 ou 2, comprenant en outre :
une liaison continue (30) qui connecte le dispositif de conversion (40) et le circuit de commande l'un à l'autre,
dans laquelle le dispositif de conversion (40) comprend en outre un commutateur de régénération (47B) disposé au centre d'une ligne d'alimentation qui connecte la source de puissance (12) et la deuxième unité de conversion de puissance électrique (42) l'une à l'autre, et
dans laquelle le contrôleur (80) limite un courant d'appel de la source de puissance (12) à la deuxième unité de conversion de puissance électrique (42) en commandant le commutateur de régénération (47B) conformément à l'état de la liaison continue (30).

4. Machine de moulage par injection selon la revendication 3,
dans laquelle le dispositif de conversion (40) comprend en outre :
une résistance (43B) limitant un courant d'appel de la première unité de conversion de puissance électrique (41) à la liaison continue (30) ;
une ligne shuntage (45B) shuntant la résistance (43B) ; et
un commutateur de shuntage (46B) disposé au centre de la ligne de shuntage (45B), et
dans laquelle le contrôleur (80) limite le courant d'appel de la première unité de conversion de puissance électrique (41) à la liaison continue (30) en commandant le commutateur de shuntage (46B) conformément à l'état de la liaison continue (30).

5. Machine de moulage par injection selon la revendication 4,
dans laquelle le contrôleur (80) commute le commutateur de régénération (47B) d'ouvert à fermé après la commutation du commutateur de shuntage (46B) d'ouvert à fermé.

6. Machine de moulage par injection selon l'une quelconque des revendications 1 à 5, comprenant en outre :
une liaison continue (30) connectant le dispositif de conversion (40B) et le circuit de commande l'un à l'autre ;
un commutateur de régénération (47B) disposé au centre d'une ligne d'alimentation qui connecte la source de puissance (12) et la deuxième unité de conversion de puissance électrique (42) l'une à l'autre ;
dans laquelle le contrôleur (80) est configuré pour limiter un courant d'appel de la source de puissance (12) à la deuxième unité de conversion de puissance électrique (42) en commandant le commutateur de régénération (47B) conformément à l'état de la liaison continue (30).

7. Machine de moulage par injection selon la revendication 6,
dans laquelle le dispositif de conversion (40B) comprend en outre :
une résistance (43B) limitant un courant d'appel de la première unité de conversion de puissance électrique (41) à la liaison continue (30) ;
une ligne de shuntage (45B) shuntant la résistance (43B) ; et
un commutateur de shuntage (46B) disposé au centre de la ligne de shuntage (45B), et
dans laquelle le contrôleur (80) limite le courant d'appel de la première unité de conversion de puissance électrique (41) à la liaison continue (30) en commandant le commutateur de shuntage (46B) conformément à l'état de la liaison continue (30).

8. Machine de moulage par injection selon la revendication 7,
dans laquelle le contrôleur (80) commute le commutateur de régénération (47B) d'ouvert à fermé après la commutation du commutateur de shuntage (46B) d'ouvert à fermé.
